# EUROPÄISCHE PATENTSCHRIFT

(11) **EP 1 596 694 B1**
(45) Veröffentlichungstag und Bekanntmachung des Hinweises auf die Patenterteilung: **14.05.2008**
(21) Anmeldenummer: 04713840.9
(22) Anmeldetag: 24.02.2004
(51) Int. Cl.: A47J 39/00

(54) **GERÄT ZUR ERWÄRMUNG VON SPEISEN**
APPLIANCE FOR HEATING MEALS
APPAREIL POUR CHAUFFER DES ALIMENTS

(30) Priorität: 25.02.2003 DE 10309506
(43) Veröffentlichungstag der Anmeldung: 23.11.2005
(73) Patentinhaber: MGS Modular Galley Systems AG, 89275 Elchingen (DE)
(72) Erfinder: Walter, Hubert Eric, 89073 Ulm (DE)
(74) Vertreter: Raunecker, Klaus Peter
(86) Internationale Anmeldenummer: PCT/DE2004/000396
(87) Internationale Veröffentlichungsnummer: WO 2004/075703

(56) Entgegenhaltungen:
- EP-A- 0 818 169
- US-A- 5 466 915
- US-A- 5 954 984

## Beschreibung

Die Erfindung betrifft ein Gerät zur Erwärmung von Speisen gemäß dem Oberbegriff von Anspruch 1. Es besteht aus einem mittels einer Tür verschließbaren Gehäuse, das für elektromagnetische Wellen eine abschirmende Wirkung in Richtung auf die Umgebung aufweist. Im Gehäuseinneren sind ein oder mehrere Funktionsböden aufgenommen. In einem solchen Funktionsboden sind wiederum eine oder mehrere Induktionsspulen vorhanden. Innerhalb der elektromagnetischen Wechselfelder der Induktionsspulen kann eine Erwärmung erfolgen, wenn dort hierfür geeignete Gegenstände (z.B. Behältnisse) die zumindest teilweise aus induktiv erwärmbaren Werkstoffen bestehen oder solche Stoffe dort angeordnet sind.

Die Erfindung ist insbesondere dann geeignet, wenn vorbereitete Speisen für einen Verzehr in kurzer Zeit, mit erhöhter Energieeffizienz und erhöhter Qualität erwärmt werden sollen. Hierfür besonders prädestinierte Einsatzorte sind z.B. humanmedizinische Kliniken oder auch Fahrzeuge, bevorzugt Luftfahrzeuge. Dort werden aber erhöhte Anforderungen bzgl. unerwünschter elektromagnetischer Felder oder Wellen gestellt, da diese elektronische Geräte in unerwünschter Form beeinflussen können und dies wiederum zu Schäden an den Geräten, den Fahrzeugen oder auch die Gesundheit oder das Leben von Personen führen kann.

Dieses Problem kann zwar mit bekannten Lösungen, wie sie beispielsweise in DE 198 18 831 A1 beschrieben sind größtenteils mittels eines metallischen Gehäuses gelöst werden. Ein weiteres Gerät ist aus der US 5 466 915A bekannt. Kritisch bleibt jedoch der Türbereich. So muss auch gesichert werden können, dass dauerhaft keine elektromagnetischen Wellen aus Türspalten austreten können oder auch keine solchen Wellen aus geöffneten Türöffnungen mit absoluter Sicherheit abgestrahlt werden.

Des Weiteren weisen hierfür bekannte Lösungen noch Nachteile in der Handhabbarkeit für das Bedienpersonal und weitestgehend automatisierte selektive Speisenerwärmung auf.

Lokale Überhitzungen können nur schwer bzw. schlecht vermieden werden, so dass zumindest die Qualität der erwärmten Speisen beeinträchtigt sein kann.

Aus US 5,466,915 ist ebenfalls ein Gerät zur Erwärmung von Speisen mit einem Gehäuse, das mit einer Tür verschlossen werden kann und bei dem Funktionsböden vorhanden sind, bekannt.

Es ist daher Aufgabe der Erfindung Möglichkeiten vorzuschlagen, mit der die Betriebssicherheit von Geräten zur induktiven Erwärmung von Speisen erhöht werden kann.

Erfindungsgemäß wird diese Aufgabe mit einem Gerät, dass die Merkmale des Anspruchs 1 aufweist, gelöst. Vorteilhafte Ausgestaltungsformen und Weiterbildungen können mit den in den untergeordneten Ansprüchen genannten Merkmalen erreicht werden.

Das erfindungsgemäße Gerät weist ein bis auf eine verschließbare Türöffnung geschlossenes Gehäuse auf, das so ausgebildet ist, dass elektromagnetische Wellen, die z.B. auch von Induktionsspulen zur Erwärmung von Speisen oder anderen erzeugenden elektromagnetischer Wellen ausgehen, abgeschirmt werden und demzufolge eine Beeinflussung außerhalb des Gerätes vermieden werden kann. So kann das Gehäuse ganz oder lediglich eine innere Wandung aus einem geeigneten Werkstoff bestehen.

Für den unerwünschten Austritt von elektromagnetischen Wellen in die Umgebung durch den Türbereich, sowohl bei geöffneter, wie auch geschlossener Tür, sind erfindungsgemäß elektrische Leiter vorzusehen, die an Funktionsböden, in denen Induktionsspulen vorhanden sind, angeordnet werden.

Es ist mindestens ein elektrischer Leiter an einer in Richtung auf die Tür weisenden Stirnfläche eines Funktionsbodens vorzusehen. Der eine oder eder von mehreren elektrischen Leitern ist zwingend zur Einhaltung eines Äquipotentials an Umgebungs-, Gehäuse-, und/oder Erdpotential angeschlossen, so dass er auch in Verbindung mit dem abschirmenden Gehäuse eine Abschirmung für elektromagnetische Wellen bildet. Der jeweilige Potentialanschluss richtet sich im Wesentlichen nach dem Einsatzort des Gerätes.

Die elektrischen Leiter sollten über die gesamte Länge einer Stirnfläche eines Funktionsbodens geführt sein. Vorteilhaft sollten sie auch zumindest weiter entlang der sich anschließenden orthogonal zur Stirnfläche ausgerichteten Seitenflächen geführt sein.

Die elektrischen Leiter können am jeweiligen Funktionsboden durch Form-, Kraft- oder Stoffschluss befestigt sein, wobei auch Kombinationen dieser Verbindungsarten möglich sind.

Die elektrischen Leiter können als Metallprofil, beispielsweise als Winkel- oder U-Profil ausgebildet, in diesem Bereich von Funktionsböden integriert oder als elektrisch leitende Beschichtung aufgebracht sein.

Es besteht aber auch die Möglichkeit elektrische Leiter an der Innenseite einer Tür zu befestigen, so dass sie beim Schließen der Tür in Bezug zu Stirnflächen von Funktionsböden positioniert sind und ihre abschirmende Wirkung erfüllen können.

Innerhalb eines Gerätes ist es nicht zwingend erforderlich an jedem Funktionsboden einen abschirmenden elektrischen Leiter vorzusehen, sondern es genügt, wenn Mindestabstände eingehalten worden sind. So sollte der maximale Abstand eines elektrischen Leiters zum Gehäuse und auch zu einem, benachbarten elektrischen Leiter nicht größer als 500 mm, bevorzugt auch größer als 300 mm sein.

Der Abstand sollte auch nicht größer als 1/3, bevorzugt 1/5 in EURO CAE ED-14 D/RTLA DO-160 (C, D oder E) Sektion 21 vorgegebenen Antennenabstandes sein.

Dies ist ohne weiteres realisierbar, wenn mehrere Funktionsböden fest in einem Gerät installiert sind.

Insbesondere für eine erleichterte Reinigung des Geräteinnenraums und der Funktionsböden ist es vorteilhaft, die Funktionsböden herausnehmbar zu gestalten. So ausgebildete Funktionsböden können durch die Türöffnung eingeführt oder daraus entnommen werden. So können an der Innenwand des Gerätes Führungs- und/oder Stützschienen für die Funktionsböden vorhanden sein. Innerhalb des Gehäuses sind dann für die einzelnen Funktionsböden jeweils Verbindungselemente, und an den Funktionsböden komplementär dazu ausgebildete Verbindungselemente, beispielsweise entsprechende Steckerleisten vorhanden. Beim Einführen von Funktionsböden kann die Verbindung hergestellt werden, so dass die Funktionsböden elektrisch an eine Energieversorgung und auch an eine elektronische Steuerung angeschlossen sind. Ein solcher Anschluss kann dann auch für die Einhaltung des Äquipotentials zum elektrischen Leiter genutzt werden.

Solche austauschbaren Funktionsböden, die in mehreren Ebenen übereinander innerhalb eines Gerätes eingesetzt werden können, erhöhen auch die Einsatzflexibilität. So können Ebenen frei gehalten und dementsprechend Speisen in erhöhten Behältnissen erwärmt werden.

Die Funktionsböden können vorteilhaft so ausgebildet sein, dass die eine oder auch mehrere Induktionsspule(n) zwischen ebenen plattenförmigen Elementen aus einem thermostabilen Werkstoff von oben und unten allseitig wasserdicht eingefasst sind. Dies kann beispielsweise thermostabiler Kunststoff, eine Keramik oder Glimmer sein. Neben der Temperaturresistenz sollte dieser Werkstoff leicht zu reinigen sein und die Anforderungen an die Lebensmittelhygiene erfüllen.

Im Inneren des Gerätes kann zusätzlich mindestens ein ebenes flächiges abschirmendes Element angeordnet sein. Es kann aus einem rein ferritischen oder Ferrite enthaltenden Werkstoff bestehen. Eine richtungs-spezifische Abschirmung für elektromagnetische Wellen kann so erreicht werden.

Ein solches Element kann z.B. am Boden des Gerätes angeordnet sein. Abschirmende Elemente können aber auch ober- oder unterhalb von Funktionsböden angeordnet werden. Es versteht sich von selbst, dass abschirmende Elemente nicht unmittelbar oberhalb eines Funktionsbodens angeordnet werden sollten, zumindest dann nicht, wenn dieser benutzt werden soll. Eine unmittelbare Anordnung unterhalb von Funktionsböden ist aber möglich. Es besteht sogar die Möglichkeit, dass ein so angeordnetes abschirmendes Element integraler Bestandteil eines Funktionsbodens ist.

An der Oberfläche von Funktionsböden können auch elektrisch leitende Elemente oder Bereiche vorgesehen werden, die durch den Einfluss elektromagnetischer Wechselfelder und/oder durch parasitäre Erwärmung von Induktionsspulen erwärmt werden können. Diese Wärme kann für die Erwärmung von Tüchern oder Backwaren mit etwas geringerer Temperatur bzw. Leistung, als zu erwärmende Speisen genutzt werden. Sie kann aber auch durch Wärmeleitung die Innenwand des Gerätes erwärmt werden, was z.B. für eine katalytische Selbstreinigung des Innenraumes günstig sein kann. So können auch Bakterien oder andere Keime bei Erreichen oder Überschreiten einer Temperatur von 100 °C abgetötet werden.

Innerhalb eines Funktionsbodens können eine aber auch mehrere Induktionsspulen angeordnet und in verschiedenster Form elektrisch verschaltet sein. Die Induktionsspulen können jeweils gleiche elektrische und elektromagnetische Parameter aufweisen. Mehrere Induktionsspulen in Reihe und/oder parallel geschaltet sein.

Obwohl diese Vorgaben erfüllt sind, werden die einzelnen Induktionsspulen oder auch Reihenschaltungen von Induktionsspulen bei der Erwärmung von Speisen nicht gleichmäßig elektrisch belastet. Die jeweilige Last wird auch von den elektrischen Eigenschaften der jeweiligen Behältnisse in denen die Speisen enthalten sind beeinflusst. Es ist auch weiter zu berücksichtigen, dass nicht alle Speisen, die in Bezug zu Induktionsspulen eines Funktionsbodens auf gleiche Temperaturen oder sogar überhaupt nicht erwärmt werden sollen.

Insbesondere die einleitend bereits angesprochene Überhitzung sollte vermieden werden. So können in aber auch an Funktionsböden Temperatursensoren oder Temperatursensorschaltelemente vorhanden sein, die bei Erreichen von vorgebbaren Maximaltemperaturen eine Abschaltung einer, mehrerer oder aller Induktionsspulen eines Funktionsbodens generieren. Hierfür sind beispielsweise PTC's oder Bimetallschaltern geeignete elektrische bzw. elektronische Elemente unter diesen Einsatzbedingungen.

Mit Sensorelementen kann das Abschalten von Induktionsspulen über eine elektronische Steuerung erreicht werden. Sensorschaltelemente können eine oder mehrere Induktionsspulen direkt abschalten.

Insbesondere bei Ausführungen von Funktionsböden mit einer Mehrzahl von Induktionsspulen, die in Geräten mit erhöhter Verwendungsflexibilität genutzt werden können, ist es vorteilhaft die Erwärmung von Speisen enthaltenden Behältnissen in Verbindung mit Einschubelementen vorzunehmen. In solchen Einschubelementen sind dann Aufnahmen für Behältnisse ausgebildet, so dass die Behältnisse zumindest in zwei besser jedoch in drei Dimensionen in Bezug zu Induktionsspulen positioniert werden können. Die Aufnahmen können also in ihrer Anordnung an die Position der Induktionsspulen und in ihrer Gestaltung und Dimensionierung an die jeweiligen Behältnisse angepasst werden. So können sie in einer optimalen Position eines elektromagnetischen Wechselfeldes von Induktionsspulen für eine gleichmäßige schnelle und energiesparende Erwärmung von Speisen positioniert werden.

Aufnahmen können an Einschubelementen so angeordnet sein, dass dort keine Erwärmung erfolgt. Dies ist durch entsprechende Positionierung außerhalb elektromagnetischer Wechselfelder möglich.

An Einschubelementen können Kodierelemente vorhanden sein, die eine individuelle Erkennung des jeweiligen Einschubelementes inklusive seiner Bestückung oder des Vorhandenseins von Deckeln auf Einschubelementen oder Behältnissen ermöglicht. Innerhalb des Gerätes sind dann für die einzelnen Funktionsbödenebenen Detektoren für die Kodierelemente vorhanden. Nach Erkennung des jeweiligen Einschubelementes kann mit entsprechender Vorprogrammierung für dieses Einschubelement die lokal gezielte Speisenerwärmung z.B. durch einschalten bestimmter Induktionsspulen und ausgeschaltet lassen anderer Induktionsspulen erfolgen. So kann beispielsweise auch differenziert Wasserdampf erzeugt werden oder nicht, wobei auf Möglichkeiten zur Wasserdampferzeugung noch hingewiesen werden wird.

Für die bezeichneten Zwecke ist es außerdem vorteilhaft, wenn die Einschubelemente definiert in ein Gerät eingeführt und in Bezug zu einem Funktionsboden positioniert werden können. Hierfür können an den inneren Seitenwänden oder den seitlichen Rändern von Funktionsböden Profilelemente vorhanden sein, in die an den seitlichen Rändern von Einschubelementen ausgebildete Profile eingeführt werden können. So kann in einfachster Form ein bestimmter seitlicher Abstand oder eine mitten zentrierte Positionierung von Einschubelementen erreicht werden.

Werden aber die Profilelemente und Profile an den sich diametral gegenüberliegenden Flächen oder Seiten nicht identisch ausgebildet bzw. auch in anderen Abständen vom Rand oder der Innenwand angeordnet, können die Einschubelemente nur in einer einzigen Richtung in das Gerät eingeführt werden.

Die erfindungsgemäßen Geräte können außerdem weitergebildet werden, wenn sie in Kombination mit einem Kühlsystem betrieben werden können. So besteht die Möglichkeit in bestimmten Zeiträumen Speisen innerhalb des Gerätes gekühlt zu lagern und diese dann später auch zu erwärmen. Ein Kühlsystem kann mit allen erforderlichen Komponenten im Gerät integriert oder teilweise solche Komponenten als beizustellender Zusatzmodul ausgebildet worden sein, wobei in diesem Fall ein Wärmetauscher innerhalb des Gerätes zum Kühlen angeordnet sein kann und Schnittstellen zu einem externen Kühlsystem vorhanden sein sollten.

So können eine oder mehrere Zuführungen für eine Zuführung eines Kühlmediums, bevorzugt gekühlte Luft, von außen vorhanden sein.

Das Kühlmedium kann vorteilhaft zwischen einzelnen, auch ausgewählten Funktionsböden in geregelter Form zu und hindurchgeführt werden.

Nachfolgend soll die Erfindung beispielhaft näher beschreiben werden.

Dabei zeigen:
- Figur 1: in schematischer, perspektivischer Darstellung ein Beispiel eines erfindungsgemäßen Gerätes;
- Figur 2: in schematischer Form Funktionsböden mit elektrischen Leitern für eine Abschirmung elektromagnetischer Wellen;
- Figur 3: einen Funktionsboden mit Induktionsspulen;
- Figur 4: ein Beispiel eines Einschubelementes;
- Figur 5: ein Beispiel einer Kavität zur Erzeugung von Wasserdampf;
- Figur 6: ein Beispiel eines Deckels für Einschubelemente;
- Figur 7: zwei weitere Beispiele für Einschubelemente und
- Figur 8: in schematischer Form eine Führung für Einschubelemente mit Profilelementen und Profilen.

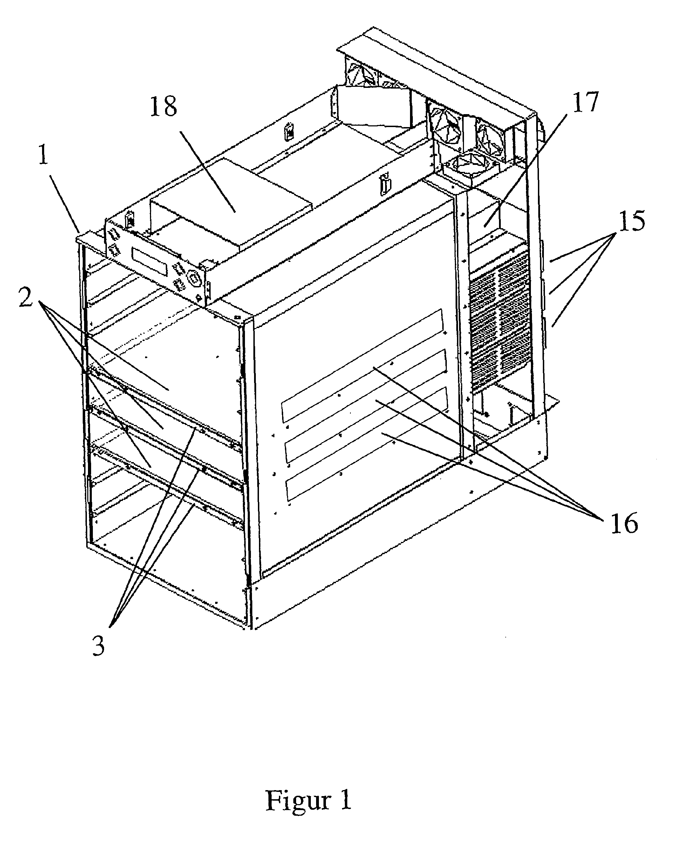

Mit Figur 1 ist in schematischer Form ein Beispiel eines erfindungsgemäßen Gerätes gezeigt. Innerhalb des Gehäuses 1 sind hier drei Funktionsböden 2 übereinander angeordnet und horizontal ausgerichtet.

An den in Richtung der Türöffnung weisenden Stirnflächen der Funktionsböden 2 sind elektrische Leiter 3 angebracht, die in diese Richtung eine sichere Abschirmung für elektromagnetische Wellen in die Umgebung des Gerätes bilden.

Bei diesem Beispiel ist weiter ein Kühlsystem 17 in das Gerät integriert.

Für die Funktionsböden 2 sind am Gehäuse 1 Detektorleisten 16 mit diskret angeordneten Einzeldetektoren vorhanden, mit deren und der Hilfe von Kodierelementen 23 an Einschubelementen 5, deren Identifikation erreichbar ist.

In einem Zwischengehäuse ist hier eine Zentralsteuerung 18 angeordnet.

Die Funktionsböden 2 können durch die Türöffnung entfernt und wieder in das Gerät eingesetzt werden.

Hierzu sind an der Stirnfläche der Funktionsböden 2, die parallel zu Stirnflächen mit elektrischen Leitern 3, die im allgemeinen Teil der Beschreibung erwähnten Verbindungselemente vorhanden, die in Verbindungselemente an der Gehäuseinnenwand zur Erreichung elektrischer Verbindungen eingeführt werden können (nicht dargestellt).

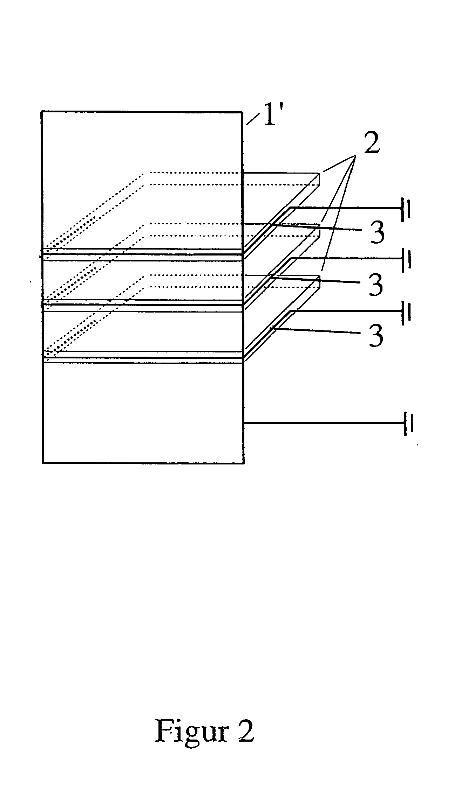

In Figur 2 ist in schematischer Form eine mögliche Anordnung und Ausbildung elektrischer Leiter 3 an Funktionsböden 2 im Türöffnungsbereich gezeigt. Die elektrischen Leiter 3 sind hier auch entlang eines Teiles der Seitenflächen der Funktionsböden 2 geführt und jeder einzelne elektrische Leiter 3 gesondert an Umgebungs-, Gehäuse- oder Erdpotential angeschlossen. Letzteres trifft auch für das Gehäuse 1 inklusive des hier dargestellten Türrahmens 1' am Gerät zu.

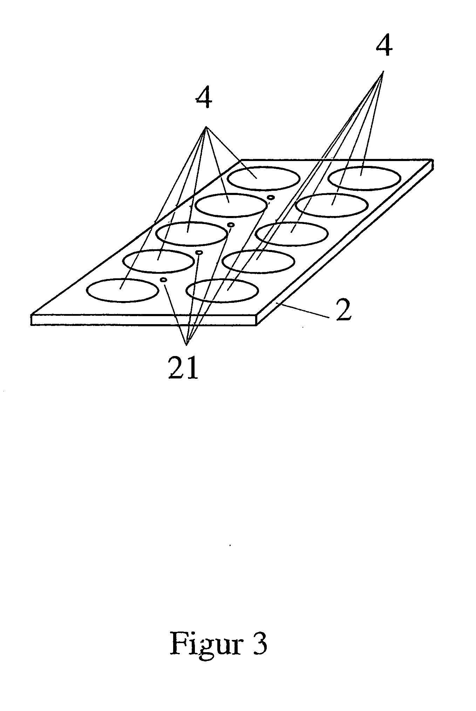

In Figur 3 ist die Anordnung von Induktionsspulen 4 und Temperatursensorschaltelementen 21 an einem Funktionsboden beispielhaft dargestellt.

Hierbei sind die Induktionsspulen 4' z.B. in zwei parallelen Reihen regelmäßig angeordnet. Zwischen den beiden Reihen von Induktionsspulen 4 sind die Temperatursensorschaltelemente 21 angeordnet. Dabei kann ihre Anordnung auch von der Darstellung abweichen. Ihre Anordnung sollte jedoch die elektrische Verschaltung der Induktionsspulen 4 untereinander berücksichtigen.

So kann die Reihenschaltung von hier jeweils fünf Induktionsspulen oder von fünf Paaren von in Reihe geschalteten Induktionsspulen 4, die jeweils wieder zueinander-parallel-geschaltet sind, berücksichtigt werden.

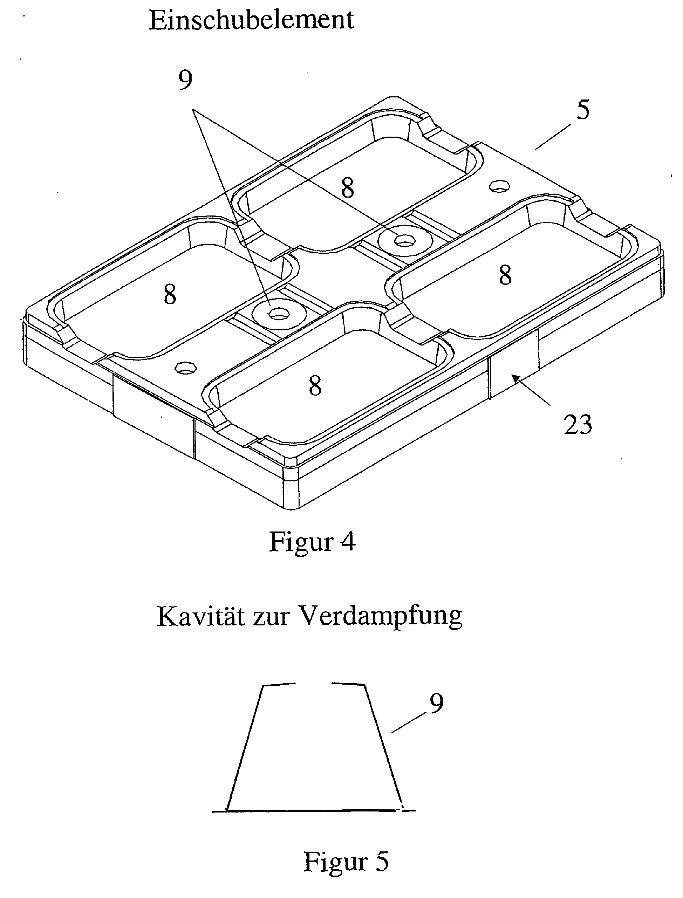

In Figur 4 ist ein Beispiel eins Einschubelementes 5 perspektivisch gezeigt. Hierbei sind insgesamt vier Aufnahmen 8 für zu erwärmende Speisen enthaltende Behältnisse (nicht dargestellt) am Einschubelement 5 vorhanden. In diese können die Behältnisse eingesetzt und in Bezug zu Induktionsspulen 4 eines Funktionsbodens positioniert werden.

Am gezeigten Einschubelement 5 ist ein Ferromagnet, als Kodierelement 23 an einer vorgegebenen Position befestigt. Dessen Position kann mittels der Detektoren einer Detektorleiste 16 erkannt und so das Einschubelement 5 individuell identifiziert und von ggf. anders ausgebildeten oder bestückten Einschubelementen 5 unterschieden werden. Kodierelemente 23 können aber auch als reflektierende Elemente ausgebildet sein, die mit optischen Detektoren in diskreter Anordnung eine Identifikation ermöglichen.

Bei diesem Einschubelement 5 sind zwei Kavitäten 9 vorhanden, die in ein Einschubelement 5 integriert oder auch in entsprechend ausgebildete Aufnahmen eingesetzt werden können. Diese Kavitäten 9 können mit Wasser befüllt, dann ebenfalls innerhalb eines elektromagnetischen Wechselfeldes von Induktionsspulen 4 insoweit erhitzt werden bis Wasserdampf gebildet wird.

Im Gegensatz zu den gezeigten und beschriebenen Beispielen kann Wasserdampf auch extern bzw. zentral erzeugt werden. Der Wasserdampf kann dann über eine, bevorzugt mehrere temporär verschließbare Zuleitungen in das Innere des Gerätes geführt werden. So sind Zuführungen für jeweils eine Funktionsbodenebene zu bevorzugen. In diesen Fällen können z.B. Kupplungen an Deckeln 10 für die Verbindung zu Wasserdampfzuleitungen vorhanden sein und der Wasserdampf analog über Kanäle 11 innerhalb eines mit Deckel 10 verschlossenen Einschubelementes 5 geführt werden.

Dieser Wasserdampf kann die Speisenerwärmung zumindest unterstützen, wobei eine Qualitätserhöhung der erwärmten Speisen mit dem Wasserdampf erreicht werden kann.

Eine solche Kavität 9 ist schematisch im Schnitt in Figur 5 dargestellt. Das gezeigte Beispiel hat oben eine Öffnung für den Austritt des Wasserdampfes und zum Befüllen mit Wasser. Der untere Boden ist hier aus einem elektrisch leitenden, induktiv erwärmbaren Werkstoff gebildet, kann aber auch entsprechend beschichtet sein.

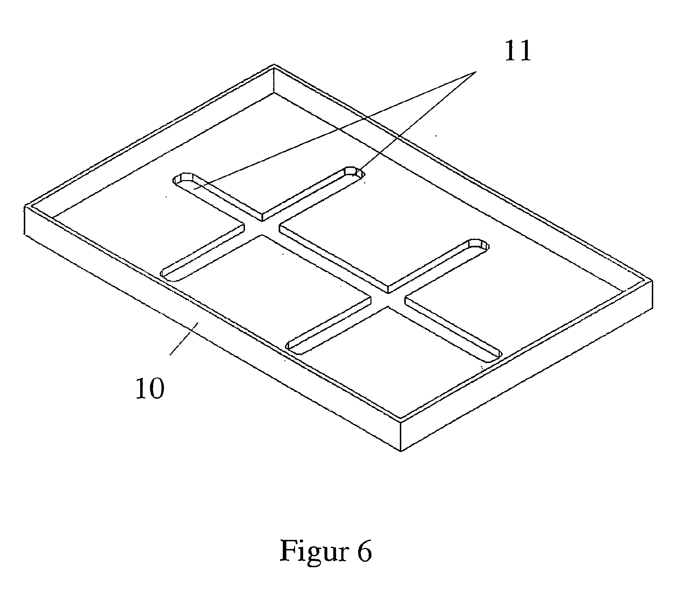

Ein solche Anordnung und Ausbildung von Kavitäten 9 und Einschubelement 5 sollte möglichst in Verbindung mit einem Deckel 10, wie er ebenfalls beispielhaft in Figur 6 gezeigt ist, eingesetzt werden.

Im Deckel 10 sind an dessen Unterseite Kanäle 11 ausgebildet. Durch diese Kanäle 11 kann der aus den Kavitäten 9 austretende Wasserdampf zu den zu erwärmenden Speisen geführt werden, wenn der Deckel 10 mit den nach unten weisenden und dort offenen Kanälen 11 auf ein Einschubelement 5 aufgesetzt worden ist, s dass Wasserdampf durch die Kanäle 11 unmittelbar zu erwärmenden Speisen, die in in Aufnahmen 8 fixierten Behältnissen angeordnet sind, geführt werden kann.

Einschubelemente 5 und Deckel 10 sollten so ausgebildet sein, dass sie lösbar miteinander verbunden werden können, wobei ein relativ dichter Verschluss, bei aufgesetztem Deckel 10 auf ein Einschubelement 5 erreicht werden sollte. Hierfür kann eine geeignete Randkontur an Deckel 10 und Einschubelement 5 vorgesehen werden.

Beide Elemente sollten aber auch möglichst umgekehrt miteinander verbunden werden können, also der Deckel 10 von unten am Einschubelement 5 formschlüssig befestigt werden können.

Günstig ist es außerdem, wenn Deckel 10 mit verbundenem Einschubelementen 5 mehrlagig übereinander stapelbar sind und ein Verrutschen innerhalb oder eines vollständigen solchen Stapels durch die Rand- und/oder Oberflächenkonturen von Deckel und Einschubelementen 5 zumindest behindert ist.

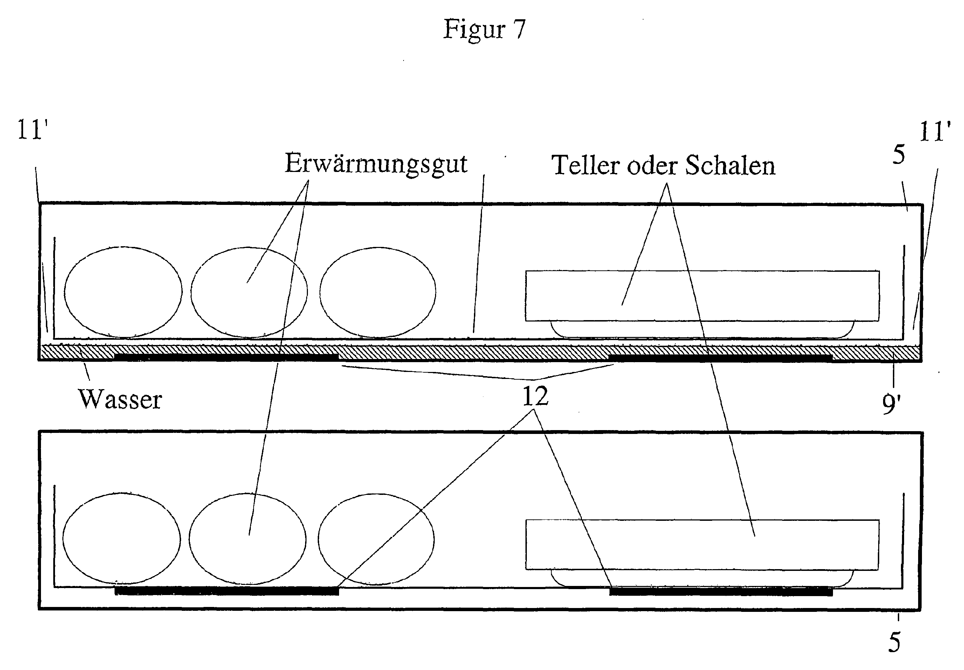

In Figur 7 sind schematisch zwei Beispiele für Einschubelemente 5 in seitlicher Schnittdarstellung gezeigt.

In der oberen Darstellung von Figur 7 sind am Boden eines Einschubelementes 5 elektrisch leitende Elemente 12 angeordnet, in die Wirbelströme zur Erwärmung induziert werden können. Diese Elemente 12 sind innerhalb einer über Kanäle 11' offenen Kavität 9' angeordnet, der mit Wasser befüllt werden kann, so dass bei Erhitzung Wasserdampf erzeugt wird und dieser für die Speisenerwärmung oder die Erwärmung und Befeuchtung von Tüchern genutzt werden kann.

Bei der unteren Darstellung sind die Elemente 12 auf dem Boden angeordnet, können aber auch dort temporär befestigt werden.

Oberhalb dieser elektrisch leitenden Elemente 12 können dann zu erwärmende Gegenstände (links dargestellt) oder Speisen enthaltende Behältnisse (rechts dargestellt) aus einem induktiv nicht oder nur schlecht erwärmbaren Werkstoff (z.B. unbeschichtetes Porzellan, Kunststoff) aufgesetzt werden.

Die elektrisch leitenden Elemente 12 können auch als Folien, Emulgate oder Schichten ausgebildet sein.

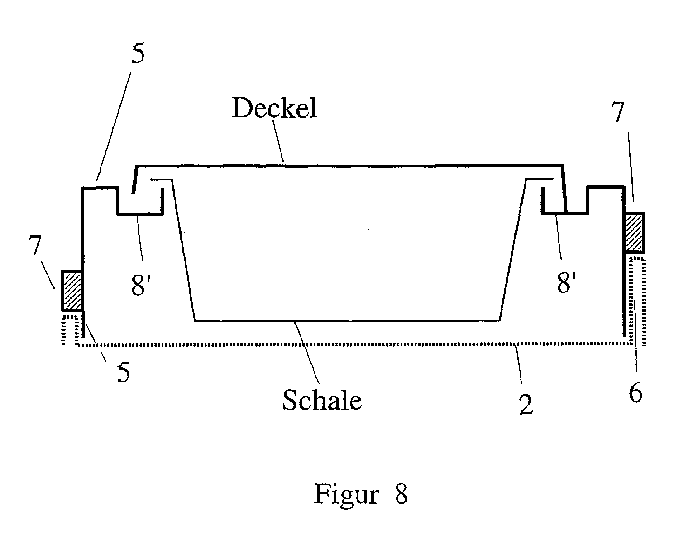

In Figur 8 soll in stark schematisierter Form das definierte Einführen von Einschubelementen 5 in ein erfindungsgemäßes Gerät deutlich gemacht werden.

Hierbei sind an den sich gegenüberliegenden Seiten der Innenwand des Gehäuses 1 oder an einem Funktionsboden 2 Profilelemente 6 vorhanden. An den äußeren Rändern eines Einschubelementes 5 sind nach unten weisend offene Profile 7 entlang der entsprechenden äußeren Ränder in Einführrichtung ausgebildet, in die die Profilelemente 6 eingreifen können. So kann ein definiertes seitenrichtiges Einführen von Einschubelementen 5 oberhalb eines Funktionsbodens 2 in ein erfindungsgemäßes Gerät und eine exakte dreidimensionionale Positionierung von zu erwärmenden Speisen, zur Wasserdampferzeugung und/oder Erwärmung von Gegenständen innerhalb elektromagnetischer Wechselfelder erreicht werden.

Mit Figur 8 kann außerdem eine vorteilhafte Ausführungsform von Einschubelementen 5 verdeutlicht werden.

Hierbei sind an einer Aufnahme 8 eine um diese umlaufende Profilierung 8' ausgebildet, die hier in Form einer umlaufenden u-förmigen Nut ausgebildet werden kann.

So können, wie in Figur 8 gezeigt, Schalen, die mit einem Deckel verschließbar sind, in eine Aufnahme 8 von Einschubelementen 5 eingesetzt werden. Dabei kann ein am Behältnis/Schale umlaufend auskragender Rand auf einem Teil der umlaufenden Profilierung 8' aufliegen, so dass die Schale/Behältnis in einem bestimmten Abstand oberhalb eines Funktionsbodens 2 gehalten ist. So kann die bereits erwähnte optimale Positionierung innerhalb eines elektromagnetischen Wechselfeldes gesichert werden.

Die umlaufende Profilierung 8' kann so gestaltet und dimensioniert sein, dass ein Deckel beim Einsetzen von Schale/Behältnis in eine Aufnahme 8 angehoben und so eine Möglichkeit für eine Zuführung von Wasserdampf geschaffen werden.

Wasserdampf kann dann durch einen Spalt zwischen dem inneren umlaufenden Rand der Profilierung 8' und dem Deckelrand eingeführt werden.

Eine andere Möglichkeit für die Zuführung von Wasserdampf ist an einer Seite der Darstellung von Figur 8 angedeutet.

Hierbei reicht der Deckel mit dem Schale/Behältnis verschlossen oder auch abgedeckt ist, nicht unmittelbar bis auf einen Boden der umlaufenden Profilierung 8', so dass Wasserdampf durch den dort vorhanden Spalt bis in das Innere einer Schale/Behältnisses gelangen kann.

Wie mit Figur 8 angedeutet, kann eine solche Spaltbildung am unteren Rand eines Deckels lediglich bereichsweise genügen, um Öffnungen für das Einführen von Wasserdampf in das Innere zur Verfügung stellen zu können.

## Patentansprüche

1. Gerät zur Erwärmung von Speisen, bei dem innerhalb eines mit einer Tür verschließbaren Gehäuses, das eine für elektromagnetische Wellen abschirmende Wirkung aufweist, ein oder mehrere Funktionsboden/-böden angeordnet ist/sind, dabei
in Funktionsböden (2) jeweils mindestens eine Induktionsspule (4) zur Erzeugung eines elektromagnetischen Wechselfeldes innerhalb dessen eine Erwärmung erreichbar ist, vorhanden ist.
**dadurch gekennzeichnet, dass** an Stirnflächen von Funktionsböden (2) die in Richtung auf eine Türöffnung des Gehäuses (1) gerichtet sind, ein elektrisch leitendes Element (3) angeordnet und jedes elektrisch leitende Element (3) jeweils an Umgebungs-, Gehäuse- und/oder Erdpotential angeschlossen ist und eine Abschirmung für elektromagnetische Wellen bildet.

2. Gerät nach Anspruch 1,
**dadurch gekennzeichnet, dass** elektrisch leitende Elemente (3) über die gesamte Länge der jeweiligen Stirnfläche eines Funktionsbodens (2) geführt sind.

3. Gerät nach Anspruch 1 oder 2,
**dadurch gekennzeichnet, dass** elektrische leitende Elemente (3) zumindest bereichsweise entlang von orthogonal zur nach außen weisenden Stirnfläche weisenden Seitenflächen von Funktionsböden (2) geführt sind.

4. Gerät nach einem der vorhergehenden Ansprüche,
**dadurch gekennzeichnet, dass** elektrisch leitende Elemente (3) form-, kraft- und/oder stoffschlüssig mit Funktionsböden (2) verbunden sind.

5. Gerät nach einem der vorhergehenden Ansprüche,
**dadurch gekennzeichnet, dass** elektrisch leitende Elemente (3) als U- oder Winkelprofil, Beschichtung ausgebildet bzw. in einem Funktionsboden (2) integriert sind.

6. Gerät nach einem der vorhergehenden Ansprüche,
**dadurch gekennzeichnet, dass** mindestens ein elektrisch leitendes Element (3) an einer Tür des Gehäuses befestigt und in geschlossener Stellung zu einer Stirnfläche eines Funktionsbodens (2) positioniert ist.

7. Gerät nach einem der vorhergehenden Ansprüche,
**dadurch gekennzeichnet, dass** der Abstand von elektrisch leitenden Elementen (3) zum Gehäuse und/oder jeweils einem benachbarten elektrisch leitenden Element (3) ≤ 500 mm ist.

8. Gerät nach einem der vorhergehenden Ansprüche,
**dadurch gekennzeichnet, dass** innerhalb des Gehäuses (1) Verbindungselemente für an Funktionsböden (2) vorhandene komplementäre Verbindungselemente für eine elektrische Verbindung vorhanden sind.

9. Gerät nach einem der vorhergehenden Ansprüche,
**dadurch gekennzeichnet, dass** Verbindungselemente für die Sicherung der Einhaltung einer Äquipotentialdifferenz an elektrisch leitenden Elementen (3) vorhanden sind.

10. Gerät nach einem der vorhergehenden Ansprüche,
**dadurch gekennzeichnet, dass** an Funktionsböden (2) induktiv erwärmbare Elemente oder Bereiche innerhalb eines elektromagnetischen Wechselfeldes von Induktionsspulen (4) angeordnet sind.

11. Gerät nach einem der vorhergehenden Ansprüche,
**dadurch gekennzeichnet, dass** innerhalb von bzw. an Funktionsböden (2) Sensor- und/oder Sensorschaltelemente angeordnet sind.

12. Gerät nach Anspruch 11,
**dadurch gekennzeichnet, dass** Temperatursensoren oder Temperatursensorschaltelemente (21) vorhanden sind.

13. Gerät nach einem der vorhergehenden Ansprüche,
**dadurch gekennzeichnet, dass** flächige elektromagnetische Wellen abschirmende Elemente in das Innere des Gehäuses (1) einsetzbar sind.

14. Gerät nach Anspruch nach 13,
**dadurch gekennzeichnet, dass** abschirmende Elemente mit einem Funktionsböden (2) verbunden oder integraler Bestandteil von Funktionsböden (2) sind.

15. Gerät nach Anspruch 13 oder 14,
**dadurch gekennzeichnet, dass** die abschirmenden Elemente aus einem ferritischen Werkstoff gebildet sind oder einen solchen Werkstoff aufweisen.

16. Gerät nach einem der vorhergehenden Ansprüche,
**dadurch gekennzeichnet, dass** an Funktionsböden (2) wärmeleitende Elemente vorhanden sind, die mit der Gehäuseinnenwand im Kontakt stehen.

17. Gerät nach einem der vorhergehenden Ansprüche,
**dadurch gekennzeichnet, dass** Induktionsspulen (4) von Funktionsböden (2) mittels thermostabiler flächiger Elemente eingefasst sind.

18. Gerät nach Anspruch 17,
**dadurch gekennzeichnet, dass** die thermostabilen flächigen Elemente im Wesentlichen aus Glimmer gebildet sind.

19. Gerät nach einem der vorhergehenden Ansprüche,
**dadurch gekennzeichnet, dass** an sich diametral gegenüberliegenden äußeren Rändern von Funktionsböden (2) oder der inneren Wandung des Gehäuses (1) Profilelemente (6) für die Führung und Positionierung von Einschubelemente (5) vorhanden und an den Einschubelementen (5) komplementär zu den Profilelementen (6) ausgebildete Profile (7) vorhanden sind.

20. Gerät nach Anspruch 19,
**dadurch gekennzeichnet, dass** die Profilelemente (6) und Profile (7) sich an den beiden sich gegenüberliegenden Seiten unterscheiden.

21. Gerät nach einem der vorhergehenden Ansprüche,
**dadurch gekennzeichnet, dass** an den Einschubelementen (5) Aufnahmen (8) für Speisen oder Erhitzungsgüter enthaltende Behältnisse vorhanden sind, so dass diese in Bezug zu Induktionsspulen (4) positionierbar sind.

22. Gerät nach einem der vorhergehenden Ansprüche,
**dadurch gekennzeichnet, dass** an den Einschubelementen (5) Kavitäten (9, 9') zur Wasserdampferzeugung innerhalb von elektromagnetischen Wechselfeldern der Induktionsspulen (4) ausgebildet oder in Einschubelemente (5) einsetzbar sind.

23. Gerät nach einem der vorhergehenden Ansprüche,
**dadurch gekennzeichnet, dass** die Einschubelemente (5) mit einem Deckel (10) verschließbar sind.

24. Gerät nach einem der vorhergehenden Ansprüche,
**dadurch gekennzeichnet, dass** Einschubelement (5) und Deckel (10) formschlüssig temporär verbindbar und/oder übereinander stapelbar sind.

25. Gerät nach einem der vorhergehenden Ansprüche,
**dadurch gekennzeichnet, dass** der Deckel (10) an der in Richtung auf Speisen enthaltende Behältnisse weisenden Oberfläche Kanäle (11) für die Leitung von aus den Kavitäten (9) austretendem Wasserdampf ausgebildet sind.

26. Gerät nach einem der vorhergehenden Ansprüche,
**dadurch gekennzeichnet, dass** an Einschubelementen (5) induktiv erwärmbare Elemente (12) oder Bereiche (12) vorhanden sind, die innerhalb eines elektromagnetischen Wechselfeldes von Induktionsspulen (4) positionierbar sind.

27. Gerät nach einem der vorhergehenden Ansprüche,
**dadurch gekennzeichnet, dass** an Einschubelementen (5) und/oder Deckeln (10) Kodierelemente (23) für eine individuelle Identifikation im Gerät vorhanden sind.

28. Gerät nach einem der vorhergehenden Ansprüche,
**dadurch gekennzeichnet, dass** am Gerät ein Kühlsystem (15) vorhanden oder darin integriert ist.

29. Gerät nach einem der vorhergehenden Ansprüche,
**dadurch gekennzeichnet, dass** mindestens ein Anschluss für die Zuführung eines Kühlmediums vorhanden ist.

30. Gerät nach einem der vorhergehenden Ansprüche,
**dadurch gekennzeichnet, dass** die Zuführung von Kühlmedien zwischen einzelne Funktionsböden regelbar ist.

31. Gerät nach einem der vorhergehenden Ansprüche,
**dadurch gekennzeichnet, dass** mindestens eine Zulieferung für extern erzeugten Wasserdampf vorhanden ist.

## Claims

1. Device for heating food, in which, within a case which can be sealed by a door, and which has a screening effect for electromagnetic waves, one or more function floor(s) is/are arranged, and in which
in each of the function floors (2), at least one induction coil (4) for generating an alternating electromagnetic field within which heating can be achieved is present,
**characterized in that** on front faces of function floors (2) which are directed in the direction towards a door opening of the case (1), an electrically conducting element (3) is arranged, and each electrically conducting element (3) is connected to ambient, case and/or earth potential, and forms screening for electromagnetic waves.

2. Device according to Claim 1,
**characterized in that** electrically conducting elements (3) are taken through the whole length of the front face of each function floor (2).

3. Device according to Claim 1 or 2,
**characterized in that** electrically conducting elements (3) are taken at least in parts along side faces, which face the outward facing front face orthogonally, of function floors (2).

4. Device according to one of the preceding claims,
**characterized in that** electrically conducting elements (3) are connected positively, non-positively or materially to function floors (2).

5. Device according to one of the preceding claims,
**characterized in that** electrically conducting elements (3) are in the form of U section or angle section or coating, and/or are integrated in a function floor (2).

6. Device according to one of the preceding claims,
**characterized in that** at least one electrically conducting element (3) is fixed to a door of the case, and is positioned in a closed position to a front face of a function floor (2).

7. Device according to one of the preceding claims,
**characterized in that** the distance from electrically conducting elements (3) to the case and/or an adjacent electrically conducting element (3) in each case is ≤ 500 mm.

8. Device according to one of the preceding claims,
**characterized in that** within the case (1), connecting elements for complementary connecting elements which are present on function floors (2) for an electrical connection are present.

9. Device according to one of the preceding claims,
**characterized in that** connecting elements for ensuring the maintenance of an equipotential difference on electrically conducting elements (3) are present.

10. Device according to one of the preceding claims,
**characterized in that** on function floors (2), elements or regions which can be heated inductively are arranged within an alternating electromagnetic field of induction coils (4).

11. Device according to one of the preceding claims,
**characterized in that** within or on function floors (2), sensor elements and/or sensor switching elements are arranged.

12. Device according to Claim 11,
**characterized in that** temperature sensors or temperature sensor switching elements (21) are present.

13. Device according to one of the preceding claims,
**characterized in that** plane elements which screen electromagnetic waves can be inserted into the interior of the case (1).

14. Device according to Claim 13,
**characterized in that** screening elements are connected to a function floor (2) or are an integral part of function floors (2).

15. Device according to Claim 13 or 14,
**characterized in that** the screening elements are made of a ferritic material or have such a material.

16. Device according to one of the preceding claims,
**characterized in that** on function floors (2) heat-conducting elements which are in contact with the inside wall of the case are present.

17. Device according to one of the preceding claims,
**characterized in that** induction coils (4) of function floors (2) are framed by means of thermally stable plane elements.

18. Device according to Claim 17,
**characterized in that** the thermally stable plane elements essentially consist of mica.

19. Device according to one of the preceding claims,
**characterized in that** on diametrically opposite outer edges of function floors (2) or the inner wall of the case (1), profiled elements (6) for guiding and positioning plug-in elements (5) are present, and on the plug-in elements (5), profiles (7) which are formed complementarily to the profiled elements (6) are present.

20. Device according to Claim 19,
**characterized in that** the profiled elements (6) and profiles (7) are different on the two opposite sides.

21. Device according to one of the preceding claims,
**characterized in that** on the plug-in elements (5), receptacles (8) for containers of food or goods to be heated are present, so that they can be positioned relative to induction coils (4).

22. Device according to one of the preceding claims,
**characterized in that** on the plug-in elements (5), cavities (9, 9') for steam generation within alternating electromagnetic fields of the induction coils (4) are formed, or can be inserted into plug-in elements (5).

23. Device according to one of the preceding claims,
**characterized in that** the plug-in elements (5) can be sealed with a cover (10).

24. Device according to one of the preceding claims,
**characterized in that** the plug-in element (5) and cover (10) can be temporarily positively connected and/or stacked one above the other.

25. Device according to one of the preceding claims,
**characterized in that** on the cover (10), on the surface facing in the direction of containers of food, channels (11) for carrying steam escaping from the cavities (9) are formed.

26. Device according to one of the preceding claims,
**characterized in that** on plug-in elements (5), elements (12) or regions (12) which can be inductively heated, and can be positioned within an alternating electromagnetic field of induction coils (4), are present.

27. Device according to one of the preceding claims,
**characterized in that** on plug-in elements (5) and/or covers (10), coding elements (23) for individual identification in the device are present.

28. Device according to one of the preceding claims,
**characterized in that** a cooling system (15) is present on the device or is integrated in it.

29. Device according to one of the preceding claims,
**characterized in that** at least one connection for feeding a cooling medium is present.

30. Device according to one of the preceding claims,
**characterized in that** the feeding of cooling media between individual function floors can be regulated.

31. Device according to one of the preceding claims,
**characterized in that** at least one supply for externally generated steam is present.

## Revendications

1. Dispositif pour le réchauffement de plats, dans lequel, à l'intérieur d'un boîtier refermable avec une porte, qui a une fonction de protection contre les ondes électromagnétiques, se trouvent un ou plusieurs plateaux fonctionnels,
au moins une bobine d'induction (4) se trouvant dans les plateaux fonctionnels (2), pour la production d'un champ alternatif à l'intérieur duquel un réchauffement peut être obtenu,
**caractérisé en ce que**, au niveau de faces frontales des plateaux fonctionnels (2), qui sont orientées en direction d'une ouverture des portes du boîtier (1), se trouve un élément électriquement conducteur (3), et chaque élément électriquement conducteur (3) est raccordé à un potentiel d'environnement du boîtier et/ou de la terre et constitue une protection contre les ondes électromagnétiques.

2. Dispositif selon la revendication 1,
**caractérisé en ce que** des éléments électriquement conducteurs (3) sont guidés sur toute la longueur de la face frontale d'un plateau fonctionnel (2).

3. Dispositif selon la revendication 1 ou 2,
**caractérisé en ce que** des éléments électriquement conducteurs (3) sont guidés au moins partiellement le long de faces frontales des plateaux fonctionnels (2), orientées perpendiculairement vers l'extérieur.

4. Dispositif selon l'une des revendications précédentes,
**caractérisé en ce que** des éléments électriquement conducteurs (3) sont reliés, avec une complémentarité de forme, avec une transmission des forces et/ou avec une liaison de matière avec les plateaux fonctionnels (2).

5. Dispositif selon l'une des revendications précédentes,
**caractérisé en ce que** des éléments électriquement conducteurs (3) se présentent sous la forme de profilés en U ou de profilés angulaires, d'un revêtement ou sont intégrés dans un plateau fonctionnel (2).

6. Dispositif selon l'une des revendications précédentes,
**caractérisé en ce qu'**au moins un élément électriquement conducteur (3) est fixé à une porte du boîtier et est positionné en position fermée sur une face frontale d'un plateau fonctionnel (2).

7. Dispositif selon l'une des revendications précédentes,
**caractérisé en ce que** la distance entre les éléments électriquement conducteurs (3) et le boîtier et/ou un élément électriquement conducteur adjacent (3) ≤ 500 mm.

8. Dispositif selon l'une des revendications précédentes,
**caractérisé en ce que**, à l'intérieur du boîtier (1) se trouvent des éléments de connexion pour des éléments de connexion complémentaires se trouvant sur les plateaux fonctionnels (2), pour réaliser une connexion électrique.

9. Dispositif selon l'une des revendications précédentes,
**caractérisé en ce que** des éléments de connexion sont prévus pour garantir le maintien d'une différence équipotentielle au niveau des éléments électriquement conducteurs (3).

10. Dispositif selon l'une des revendications précédentes,
**caractérisé en ce que**, sur les plateaux fonctionnels (2), se trouvent des éléments pouvant être chauffés par induction ou des zones à l'intérieur d'un champ électromagnétique alternatif généré par des bobines d'induction (4).

11. Dispositif selon l'une des revendications précédentes,
**caractérisé en ce que**, à l'intérieur des plateaux fonctionnels (2) ou au niveau de ceux-ci, se trouvent des capteurs et/ou des éléments de commutation à capteurs.

12. Dispositif selon la revendication 11,
**caractérisé en ce que** des capteurs de température ou des éléments de commutation à capteurs de température (21) sont prévus.

13. Dispositif selon l'une des revendications précédentes,
**caractérisé en ce que** des éléments plats de protection contre les ondes électromagnétiques peuvent être insérés à l'intérieur du boîtier (1).

14. Dispositif selon la revendication 13,
**caractérisé en ce que** des éléments de protection sont reliés à un plateau fonctionnel (2) ou font partie intégrante des plateaux fonctionnels (2).

15. Dispositif selon la revendication 13 ou 14,
**caractérisé en ce que** les éléments de protection sont constitués d'un matériau ferritique ou contiennent un tel matériau.

16. Dispositif selon l'une des revendications précédentes,
**caractérisé en ce que**, au niveau des plateaux fonctionnels (2) se trouvent des éléments conducteurs thermiques en contact avec la paroi interne du boîtier.

17. Dispositif selon l'une des revendications précédentes,
**caractérisé en ce que** les bobines d'induction (4) des plateaux fonctionnels (2) sont bordées par des éléments plats thermostables.

18. Dispositif selon la revendication 17,
**caractérisé en ce que** les éléments plats thermostables sont constitués principalement de mica.

19. Dispositif selon l'une des revendications précédentes,
**caractérisé en ce que**, au niveau des bords diamétralement opposés des plateaux fonctionnels (2) ou sur la paroi interne du boîtier (1), se trouvent des éléments profilés (6) pour le guidage et le positionnement de tiroirs (5) et, au niveau des éléments à tiroirs (5), se trouvent des profilés (7) complémentaires des éléments profilés (6).

20. Dispositif selon la revendication 19,
**caractérisé en ce que** les éléments profilés (6) et les profilés (7) sont différents sur les deux côtés opposés.

21. Dispositif selon l'une des revendications précédentes,
**caractérisé en ce que**, au niveau des tiroirs (5), se trouvent des réceptacles (8) pour les plats ou les récipients contenant les produits à réchauffer, de façon à ce que ceux-ci puissent être positionnés par rapport aux bobines d'induction (4).

22. Dispositif selon l'une des revendications précédentes,
**caractérisé en ce que**, au niveau des tiroirs (5), des cavités (9, 9') pour la production de vapeur d'eau à l'intérieur des champs électromagnétiques alternatifs générés par les bobines d'induction (4) sont formées ou peuvent être insérées dans les tiroirs (5).

23. Dispositif selon l'une des revendications précédentes,
**caractérisé en ce que** les tiroirs (5) peuvent être obturés à l'aide d'un couvercle (10).

24. Dispositif selon l'une des revendications précédentes,
**caractérisé en ce que** le tiroir (5) et le couvercle (10) peuvent être emboîtés temporairement grâce à une complémentarité de forme et/ou peuvent être empilés l'un sur l'autre.

25. Dispositif selon l'une des revendications précédentes,
**caractérisé en ce que** le couvercle (10) comprend des canaux (11) orientés en direction des récipients contenant les plats pour le guidage de la vapeur d'eau provenant des cavités (9).

26. Dispositif selon l'une des revendications précédentes,
**caractérisé en ce que**, au niveau des tiroirs (5) se trouvent des éléments ou des zones réchauffables par induction (12), qui peuvent être positionnés à l'intérieur d'un champ électromagnétique alternatif généré par des bobines d'induction (4).

27. Dispositif selon l'une des revendications précédentes,
**caractérisé en ce que**, au niveau des tiroirs (5) et/ou des couvercles (10), se trouvent des éléments de codage (23) pour l'identification individuelle dans le dispositif.

28. Dispositif selon l'une des revendications précédentes,
**caractérisé en ce qu'**un système de refroidissement (15) est prévu sur le dispositif ou à l'intérieur de celui-ci.

29. Dispositif selon l'une des revendications précédentes,
**caractérisé en ce que** au moins un raccord est prévu pour l'introduction d'un fluide de refroidissement.

30. Dispositif selon l'une des revendications précédentes,
**caractérisé en ce que** l'introduction de fluides de refroidissement peut être régulée individuellement selon les différents plateaux fonctionnels.

31. Dispositif selon l'une des revendications précédentes,
**caractérisé en ce que** au moins une alimentation en vapeur d'eau externe est prévue.
